# EUROPEAN PATENT APPLICATION

(11) **EP 1 728 562 A1**
(43) Date of publication of application: **06.12.2006**
(21) Application number: 06011316.4
(22) Date of filing: 01.06.2006
(51) Int. Cl.: B05D 5/08, B05D 7/14

(54) **Fluoropolymer coating compositions for threaded fasteners**

(30) Priority: 01.06.2005 US 686204 P; 19.05.2006 US 437857
(71) Applicant: Nylok Corporation, Macomb, MI 48042-4007 (US)
(72) Inventor: Alaimo, Gregory, Harrison Township MI 48045 (US); Duffy, Richard J., Shelby Township MI 48316 (US)
(74) Representative: Casey, Lindsay Joseph

(57) **Abstract**

A method of manufacturing a coated threaded fastener wherein the coating acts as a contaminant mask and the coating is applied as a dry powder mixture including a fluoropolymer resin, an inert filler and a coloring pigment.

## Description

### BACKGROUND OF THE INVENTION

The present invention relates generally to powdered fluoropolymer compositions used as a protective coating on threaded fasteners. More particularly, the invention relates to improvements in powdered fluoropolymer coating compositions that are applied to the threads of such fasteners to mask the threads from contaminants to which the fasteners are exposed in various fabrication or manufacturing processes. The coating, when applied to the fasteners, prevents the contaminants from adhering to the fastener threads and thereby facilitates threaded coupling of the fasteners in later assembly operations.

Powdered fluoropolymer fastener coatings are well known. The pioneering technology in the field was developed by Nylok Corporation and introduced to the fastener industry under the trademark "Nycote" in the 1980s. These powdered fluoropolymer coatings and processes for their application to fasteners are described in United States Patent Nos. 4,835,819 and 5,221,170 the disclosures of which are incorporated herein by reference. A later patent also owned by Nylok Corporation, United States Patent No. 6,156,392, teaches the application of fluoropolymer coating onto fasteners using a triboelectric charging process. The disclosure of this later patent is also incorporated herein by reference.

In order to perform effectively as a fluoropolymer thread-masking composition, the material must meet several performance objectives.
- The material must be electrically insulating, in order to effectively prevent the unwanted adhesion of electro-deposited coatings.
- The material must prevent the adhesion of weld splatter when coated fastener products are exposed to a welding environment.
- The material must be capable of maintaining adhesion and cohesiveness while being subjected to the temperatures normally encountered when fastener products are welded into subassemblies.
- The material must not introduce significant installation torque when the fasteners are later assembled.
- The applied material must be capable of maintaining its adhesion to the fastener threads through later processing stages including washing, rinsing, e-coating, and drying.
- Optionally, the material should be capable of being displaced from (or rubbed off) the pressure flanks of the fasteners when clamp-loaded during assembly, thereby providing some level of metal-to-metal contact and allowing for electrical grounding or bonding.

Since the introduction of the original Nycote powdered fluoropolymer coatings in the 1980s, a variety of less expensive liquid fluoropolymer coatings have come to the market, but these compositions have suffered from the disadvantage that they are not able to satisfy the performance criteria previously described. Moreover, these liquid compositions require liquid handling application equipment and processes that are less desirable than that used for dry powder application.

### SUMMARY OF THE INVENTION

The present invention is directed to a powdered fluoropolymer coating composition useful in masking fasteners from thread contamination which not only meets all of the previously described performance criteria but also is substantially less costly than earlier used powdered fluoropolymer coatings. The composition of the present invention comprises a first fluoropolymer binder component and a second filler component. The fluoropolymer component may be any of the fluoropolymer compounds identified in the above listed United States Patents. The filler material is generally inert and has a particle size distribution generally comparable to that of the fluoropolymer. Materials that may be used as the filler component include polymeric resin compounds, silica compounds, calcium carbonate (enveloped in a shell of polyvinylidene chloride copolymer), calcium fluoride, and glass microspheres in both solid and hollow form.

According to an aspect of the present invention, there is provided a method for manufacturing a threaded fastener as specified in Claim 1.

The invention is also directed to apparatus for carrying out the disclosed method and including apparatus parts for performing each described method step, be it by way of hardware components, a computer programmed by appropriate software, by any combination of the two or in any other manner.

### DETAILED DESCRIPTION OF THE PREFERRED EMBODIMENTS

Powdered fluoropolymer coating compositions made in accordance with the present invention include a fluoropolymer binder component that may comprise any of the fluoropolymer compounds disclosed in US Patent Nos. 4,835,819, 5,221,170 and 6,156,392. In addition, the fluoropolymer compositions of the present invention include a filler component which may comprise polymeric resin compounds, silica compounds, calcium carbonate encapsulated in a polyvinylidine chloride copolymer, calcium fluoride or either solid or hollow glass microspheres. Examples of glass particles suitable as used as fillers are as follows:
a) Potters Industries Spheriglass 3000 E-glass (borosilicate glass) having a bulk density of approximately 2.5 grams per cubic centimeter and a mean particle size = 35 microns
b) Potters Industries Spherical Hollow Glass Spheres having a bulk density of approximately 0.6 - 1.1 grams per cubic centimeter and mean particle size of 18 microns
c) Sovereign Specialty Chemicals Dualite Composite Microspheres having a bulk density of approximately 0.135grams per cubic centimeter and mean particle size of 75 microns
d) 3M Scotchlite Glass Bubbles (soda-lime borosilicate glass) having a bulk density of approximately 0.1 grams per cubic centimeter and a mean particle size of 50 microns

The hollow glass microspheres or other hollow spherical fillers are preferred because these materials will be crushed during assembly of the fasteners and thereby reduce or eliminate any tendency of the coating to increase the fasteners' installation torque.

The fluoropolymer and filler components used in the practice of the present invention may be blended in a wide range of ratios, ranging from approximately fifty to approximately seventy-five percent fluoropolymer. A preferred composition is one utilizing sixty percent fluoropolymer and forty percent glass microspheres. In addition, it is desirable to match the bulk density of the fluoropolymer component to that of the filler component as closely as possible. Fluoropolymer powders found suitable in the practice of the present invention have a bulk density of approximately 2.0 grams per cubic centimeter. Filler materials having a bulk density in the range of about 0.1 to about 2.5 grams per cubic centimeter may be useful, but problems may arise in maintaining a uniform blended powder mixture when the filler material has a bulk density which differs from that of the fluoropolymer by more than about 0.5 grams per cubic centimeter.

Preferred fluoropolymers are polytetrafluoro ethylene (PTFE) alkoxy (PFA) resins.

The potential problem of maintaining a uniform blended powder mixture may be overcome by use of a preferred embodiment of the present invention in which the filler component is encapsulated within the fluoropolymer component.

Those of skill in the art will appreciate that by the addition of the inert filler, a much less expensive fluoropolymer coating composition may be achieved, yet one still having all of the desirable performance criteria mentioned previously. In addition, various physical characteristics of the coating such as temperature resistance, strength, resilience and lubricity may be tailored by choice of specific filler components.

## Claims

1. A method for manufacturing a threaded fastener having a thread contaminant mask applied to the fastener threads, comprising:
generating a stream of fluoropolymer resin mixture, said mixture being in dry powder form and including from about 50 to about 75 percent fluoropolymer resin, about 25 to about 50 percent non-fluoropolymer filler and about 0 percent to about 5 percent pigment;
preheating the threaded surfaces of the fastener to a temperature above the melt temperature of the fluoropolymer resin component of the mixture;
passing the preheated fastener through the fluoropolymer resin mixture stream to permit the powder mixture to adhere to the fastener threads and to form a continuous, pinhole free and generally uniform thickness coating on the fastener threads; and
cooling the coated fastener.

2. A method as claimed in claim 1 wherein the filler is selected from the group consisting of polymeric resin, silica compounds, calcium carbonate encapsulated in a polyvinylidine chloride copolymer, calcium fluoride or glass.

3. A method as claimed in claim 1 wherein the filler is comprised of glass beads or glass microspheres.

4. A method as claimed in claim 1 wherein the filler is encapsulated in the fluoropolymer resin.

5. A method as claimed in any of claims 1-4 wherein the bulk density of the fluoropolymer resin and the filler are substantially the same.

6. A method as claimed in any of claims 1-4 wherein the bulk density of the fluoropolymer resin is about 2.00 grams per cubic centimeter and the bulk density of the filler is about 0.1 to about 2.5 grams per cubic centimeter.

7. A method as claimed in any of claims 1-6 wherein the resulting coating is generally uniform across the threads of the fastener and substantially pinhole free.

8. A method as claimed in any of claims 1-7 wherein the fluoropolymer and filler components are in the ratio of approximately 60% fluoropolymer to approximately 40% filler wherein the filler is, preferably, glass microspheres.
